**Europäisches Patentamt**

**European Patent Office**

**Office européen des brevets**

(11) Veröffentlichungsnummer: **0 329 091**

**A1**

## (12) EUROPÄISCHE PATENTANMELDUNG

(21) Anmeldenummer: **89102543.9**

(51) Int. Cl.⁴: **B01F 7/04**

(22) Anmeldetag: **15.02.89**

(30) Priorität: **16.02.88 CH 550/88**

(43) Veröffentlichungstag der Anmeldung:
**23.08.89 Patentblatt 89/34**

(84) Benannte Vertragsstaaten:
**AT BE DE ES FR GB IT NL SE**

(71) Anmelder: **List AG**
**Muttenzerstrasse 107**
**CH-4133 Pratteln 2(CH)**

(72) Erfinder: **List, Heinz**
**Blözenweg 6**
**CH-4133 Pratteln(CH)**
Erfinder: **List, Jörg**
**St. Jakobsstrasse 43**
**CH-4133 Pratteln(CH)**
Erfinder: **Schwenk, Walther, Dr.**
**Dorfstrasse 32**
**CH-4303 Kaiseraugust(CH)**
Erfinder: **Kunz, Alfred**
**Sterngergweg 11**
**CH-4108 Witterswil(CH)**

(74) Vertreter: **Weiss, Peter**
**Schlachthausstrasse 1 Postfach 466**
**D-7700 Singen a.H.(DE)**

(54) **Mehrspindeliger Knetmischer.**

(57) Mehrspindeliger Knetmischer mit mindestens zwei ineinander kämmenden Wellen (50, 60), von denen eine mit Scheibenelementen (5) ausgerüstet ist, die von einer zweiten Rührwelle bei intensiver Durchmischung und Knetung abgereinigt werden, dadurch gekennzeichnet, dass zur annähernd vollständigen Reinigung beider Rührwellen feste Knetgegenelemente im Gehäuse eingesetzt sind.

Fig.4

## Mehrspindeliger Knetmischer mit festen Knetgegenelementen

Die Erfindung betrifft einen Knetmischer für die Durchführung mechanischer, chemischer und thermischer Prozesse gemäss dem Oberbegriff in Patentanspruch 1.

Es ist eine mehrspindelige Misch- und Knetmaschine nach CH-PS 506322 bekannt, bei der zwei achsparallele Wellen miteinander kämmen, von denen die eine mit in regelmässigen Abständen angeordneten radialen Scheibenelementen und darauf befestigten axial ausgerichteten Knetbarren versehen ist (Scheibenwelle), während die zweite Welle als Knetwelle Knetelemente hat, die in den Raum zwischen den Scheibenelementen und Knetbarren der Scheibenwelle eingreifen. Beide Wellen sind in einem bestimmten Drehzahlverhältnis miteinander gekoppelt, sodass der Eingriff der Knetelemente im Abreinigen der Scheiben jeweils eine dem Drehzahlverhältnis entsprechende Evolventen-Fläche bestreicht. Zwischen diesen Evolventen-Flächen befinden sich auf den Scheiben jeweils unbestrichene und damit nicht abgereinigte Scheibenteile.

Dieser Nachteil wird erfindungsgemäss dadurch behoben, dass die Scheiben zusätzlich von Knetgegenelementen abgestreift werden, die im Gehäuse befestigt sind. Durch zweckmässige Formung dieser Knetgegenelemente wird gleichzeitig eine Intensivierung der Misch- und Knetwirkung erreicht.

Die Erfindung ist in den beiliegenden Zeichnung dargestellt. Dabei zeigen

Fig. 1 eine Draufsicht auf einen zweiwelligen Knetmischer mit teilweise geschnittenem Gehäuse;

Fig. 2 einen Querschnitt durch den Knetmischer nach Linie I-I der Fig. 1;

Fig. 3 einen Längsschnitt durch den Knetmischer nach Linie II-II der Fig. 2;

Fig. 4 eine Draufsicht auf einen Knetmischer mit teilweise geschnittenem Gehäuse und einem einwelligen Austrittsgehäuse;

Fig. 5 einen Querschnitt durch den Knetmischer nach Fig. 4 und Linie III-III;

Fig. 6 einen Querschnitt durch das einwellige Gehäuse des Knetmischers nach Linie IV-IV der Fig. 5.

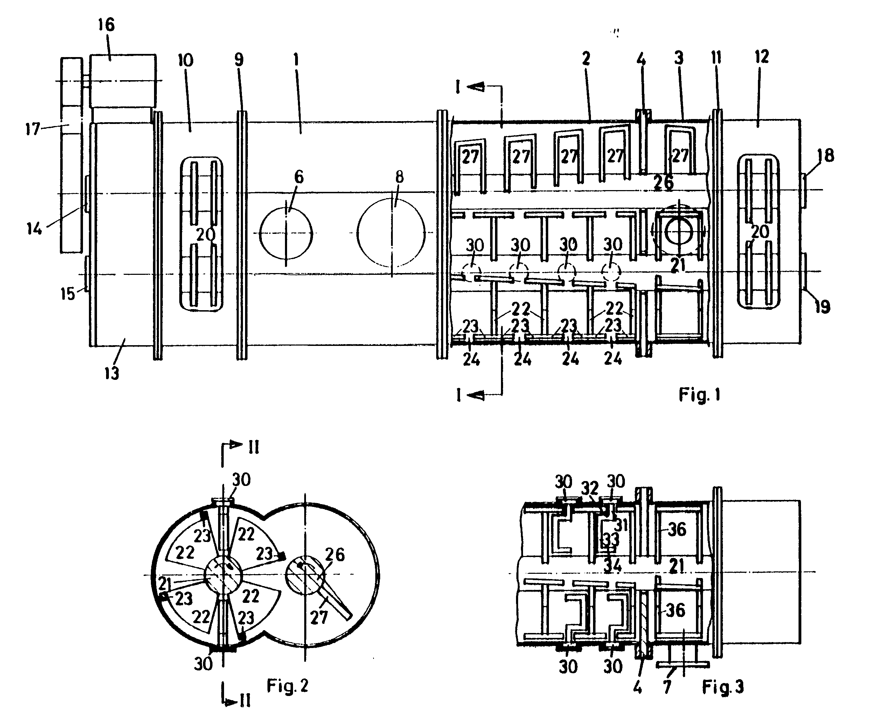

In allen Figuren sind Heiz- oder Kühlmäntel und auch die Ab- und Zuführungen des Heiz- bzw. Kühlmittels zu den Wellen der klaren Darstellung wegen nicht gezeigt. Fig. 1, 2 und 3 zeigen eine Grundausführung des Erfindungsgegenstandes. Der Arbeitsraum besteht aus einem dreiteiligen Gehäuse mit einem Eingangsteil 1, einem Mittelteil 2 und einem Auslaufteil 3, die durch Flansche miteinander verbunden sind. In der Flanschverbindung zwischen den Gehäuseteilen 2 und 3 ist die Niveauplatte 4 eingeklemmt, die ähnlich einem Überlaufwehr das Produktniveau in der Maschine bestimmt. 6 ist der Eintrittsstutzen für das Produkt, 7 der Ausfallstutzen und 8 ein Brüdenstutzen für die Abführung von Dämpfen und Gasen.

Ebenfalls angeflanscht an das Gehäuse sind die Stirnwände 9 und 11 mit den Laternen 10 und 12. Auf der Antriebsseite ist an der Laterne 10 das Getriebe 13 angeflanscht mit den Rührwellenlagerungen 14 udn 15 sowie dem Antrieb durch Elektromotor 16 und Keilriementrieb 17.

Auf der Austrittseite des Gehäuses sind die Rührwellen in den Lagern 18 und 19 der Laterne 12 abgestützt. Die Wellendurchgänge durch die Stirnwände 9 und 11 sind mit den Stopfbüchsen 20 abgedichtet. Auf der Scheibenwelle 21 sind in regelmäßigen Abständendie Scheibenelemente 22 in radialen Scheibenebenen angeordnet, auf deren äusseren Durchmesser die Knetbarren 23 aufgesetzt sind. Diese Knetbarren sind so angeordnet, dass zwischen ihnen die Lücken 24 entstehen. Die zweite achsparallele Knetwelle 26 ist mit den Knetrahmen 27 ausgerüstet, die bei dem Gegeneinander-oder Miteianderrotieren beider Wellen zwischen die Scheibenwellen eingreifen und die Scheibenelemente bei intensiver Knetung des Produktes abreinigen. Der kinematische Bewegungsablauf ist hierbei so gewählt, dass der Eingriff ähnlich wie bei Zahnrädern in der Form von Evolventen erfolgt.

Das Drehzahlverhältnis zwischen beiden Rührwellen kann beliebig variiert werden. Normalerweise rotiert die Knetwelle 26 vier Mal schneller als die Scheibenwelle 21. Die Reinigung der Scheibenelemente 22 erfolgt hierbei entsprechend dem evolventenförmigen Eingriff nur auf Teilflächen. Zur vollständigen Abreinigung der Scheiben und der Welle sind daher erfindungsgemäss Knetgegenelemente 30 dort in das Gehäuse eingesetzt, wo infolge der Lücken zwischen den Knetbarren der Scheibenwelle 23 die Innenwand des Gehäuses nicht von den Knetbarren bestrichen wird. Jedes dieser Knetgegenelemente 30 in der Form von Knethaken besteht aus einem radialen Support 31, einem axialen Tragarm 32, einem Scheibenschaber 33 und einem Wellenschaber 34. Gleichzeitig mit der guten Abreinigung der Scheiben ergibt sich eine stark verbesserte Misch- und Knetwirkung zwischen den Scheiben, die durch besondere Ausführung der Haken in gewundener oder schräger Form intensiviert wird. Zu dieser Knetwirkung trägt auch der Durchgang der Knetbarren 23 durch den Knetspalt bei, der durch den axialen Arm 32 des Knethakens und der Innenwand des Gehäuses gebildet ist. Besonders wirksam wird die Abreinigung der Knetgegenelemente, wenn die Scheibenflächen nur mit einer Durchgangslücke ausgeführt sind.

Die Rühr- und Knetelemente in dem Auslaufgehäuse 3 sind meist rahmenartig ausgeführt, wobei die radialen Teile der Rahmen als Schaber für die Niveauplatte 4, bzw. die Stirnwand 11 ausgebildet sind.

Die Knetbarren 23 auf der Scheibenwelle sowie die äusseren axialen Knetbarren auf den Rahmen 27 der Knetwelle werden zweckmässigerweise auf einer Schneckenlinie angeordnet, die den Transport des Produkts vom Eintritt 6 zum Austritt 7 bewirkt.

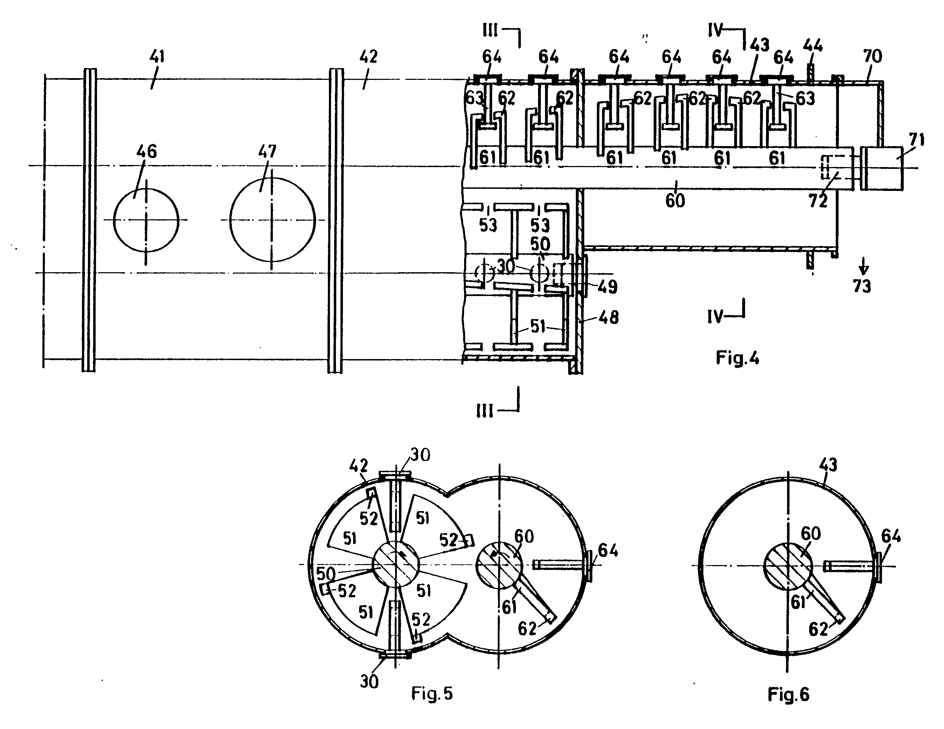

Figur 4 mit den dazugehörigen Querschnitten Fig. 5 und 6 zeigt eine Ausführung des Erfindungsgegenstandes, bei der der Auslaufteil mit einem zylindrischen Gehäuse und nur einer Rühr- und Transportwelle ausgeführt ist. Diese Ausführung hat dort Vorteile, wo die Anschlussmasse an einen folgenden Apparat z.B. einen Drehofen oder einen Kessel nur einen beschränkten Durchmesser des Anschlussflansches erlauben.

In Figur 4 ist der Antriebsteil der Maschine nicht gezeigt. Er entspricht der in Figur 1 bereits gezeigten Konstruktion. Das Gehäuse teilt sich in die Abschnitte 41, 42 und das Auslaufgehäuse 43 auf. Die Gehäuse 41 und 42 sind in der Form einer Acht gemäss Querschnitt Fig. 5 ausgeführt, während das Auslaufgehäuse 43 eine zylindrische Form gemäss Querschnitt Fig. 6 hat. Der Flansch 44 auf dem Auslaufgehäuse 43 ist der Anschlussflansch an einen folgenden Apparat. 46 ist der Einfüllstutzen für das Produkt, 47 der Stutzen für den Abzug von Dämpfen und Brüden. Die Platte 48 ist die Abschlussplatte für das Scheibenwellengehäuse, die im Bereich der Knetwelle gleichzeitig als Niveauplatte dient.

Die Scheibenwelle 50 mit den Scheibenelementen 51 und den darauf befestigten Knetbarren 52 entspricht im wesentlichen der Konstruktion, die auch in Fig. 1 gezeigt ist. Zwischen den Knetbarren 52 sind die Lücken 53 vorgesehen in die die Supporte der Knetelemente 30 eingreifen, die den Knetelementen 30 in den Fig. 1-3 entsprechen. 49 ist ein mit einem Flansch an der Stirnwand 48 befestigter Lagerzapfen für die Abstützung der Welle 50.

Die mit der Scheibenwelle 50 kämmende Knetwelle 60 ist mit dem Knetrahmen 61 bestückt, die beim Rotieren, wie bereits geschildert, in der Form einer Evolvente in die Scheibenwelle eingreifen und diese bei intensiver Durchknetung abreinigen. Die axialen Aussenbarren 62 der Knetrahmen 61 sind mit einer Lücke 63 unterbrochen. In diese Lücken sind die T-förmigen Haken 64 eingesetzt, die einerseits den inneren Teil des Knetrahmens 61 reinigen, aber andererseits ein Mitdrehen des Produktes verhindern.

Hierdurch wird die Schneckenlinie, auf der die Knetrahmen 61 mit den axialen Knetbarren 62 angeordnet sind, für einen guten Produkttransport wirksam.

70 ist das zylindrische Ausfallgehäuse mit einem Lagerkörper 71 und einem Zapfen 72 mit dem die Welle 60 gelagert ist. Das Produkt verlässt den Knetmischer am Auslauf 73.

**Ansprüche**

1. Mehrspindeliger Knetmischer zur Durchführung von mechanischen, chemischen und thermischen Prozessen mit mindestens zwei achsparallelen rotierenden Wellen, wobei auf der einen Welle radiale Scheibenelemente mit auf ihrem Aussendurchmesser befestigten, annähernd axial ausgerichteten Knetbarren angeordnet sind, die durch Knetelemente der achsparallelen zweiten Welle bei gleichzeitig intensiver Durchknetung abgereinigt werden, dadurch gekennzeichnet, dass die axial ausgerichteten Knetbarren (23, 52) auf der Scheibenwelle (21, 50) und/oder die achsial ausgerichteten Knetbarren (62) auf der Knetwelle (60) durch Lücken (24, 53, 63) unterbrochen sind und dass in diesem Bereich des Gehäuses, der von den Knetbarren nicht bestrichen wird, Knetgegenelemente (30, 64) befestigt sind, die in den freien Raum zwischen Knetbarren und Welle hineinragen.

2. Knetmischer nach Anspruch 1, dadurch gekennzeichnet, dass die zusätzlichen im Gehäuse befestigten Knetgegenelemente (30) der Scheibenwelle (21, 50) als ein oder mehrere Knethaken ausgebildet sind, die einerseits die Scheibenelemente (22, 51) abreinigen und andererseits zur Erhöhung der Knetwirkung das Produkt zwischen den Scheibenelementen (22, 51) zusätzlich umwälzen.

3. Knetmischer nach Anspruch 1 oder 2, dadurch gekennzeichnet, dass die Knetgegenelemente (64) im Gehäuse der Knetwelle (60) als T-förmige Finger ausgebildet sind.

4. Knetmischer nach einem der Ansprüche 1 bis 3, dadurch gekennzeichnet, dass die Knetgegenelemente (30) der Scheibenwelle (50) als ein oder mehrere Knethaken und die Knetgegenelemente (64) für die Knetwelle (60) als T-förmige Finger ausgebildet sind.

5. Knetmischer nach wenigstens einem der Ansprüche 1 bis 4, dadurch gekennzeichnet, dass das Doppelgehäuse (41, 42) der Knetzone am Austragsende in ein zylindrisches Gehäuse (43) übergeht, das nur von einer Welle (60) bestrichen ist.

Fig. 1

Fig. 2

Fig. 3

Fig.4

Fig.5

Fig.6

Europäisches
Patentamt

**EUROPÄISCHER RECHERCHENBERICHT**

Nummer der Anmeldung

EP 89 10 2543

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-A-2 012 294 (LIST) * Figur * & CH-A-506 322 --- | 1-4 | B 01 F 7/04 |
| Y | AT-B- 334 328 (LIST) * Figur * --- | 1-4 | |
| A | CH-A- 519 985 (WERNER & PFLEIDERER) * Figur * --- | 5 | |
| A | CH-A- 661 450 (LIST) --- | | |
| A | EP-A-0 105 436 (LIST) --- | | |
| A | CH-A- 658 798 (LIST) --- | | |
| A | EP-A-0 220 575 (KRAUSS-MAFFEI) ----- | | |

**EINSCHLÄGIGE DOKUMENTE**

**RECHERCHIERTE SACHGEBIETE (Int. Cl.4)**

B 01 F
B 29 B

Der vorliegende Recherchenbericht wurde für alle Patentansprüche erstellt

| Recherchenort | Abschlußdatum der Recherche | Prüfer |
|---|---|---|
| DEN HAAG | 08-05-1989 | PEETERS S. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
    Dokument

EPO FORM 1503 03.82 (P0403)